# EUROPÄISCHE PATENTSCHRIFT

(11) **EP 3 862 235 B1**
(45) Veröffentlichungstag und Bekanntmachung des Hinweises auf die Patenterteilung: **27.04.2022**
(21) Anmeldenummer: 20155686.7
(22) Anmeldetag: 05.02.2020
(51) Int. Cl.: B60T 1/00, B60T 7/10, F16D 63/00

(54) **VERRIEGELUNGSVORRICHTUNG EINER PARKBREMSE UND EINE PARKBREMSE**
PARKING BRAKE LOCKING DEVICE AND PARKING BRAKE
DISPOSITIF DE VERROUILLAGE D'UN FREIN DE STATIONNEMENT ET FREIN DE STATIONNEMENT

(43) Veröffentlichungstag der Anmeldung: 11.08.2021
(73) Patentinhaber: IMS Gear SE & Co. KGaA, 78166 Donaueschingen (DE)
(72) Erfinder: STÖHR, Johannes, 78052 Villingen-Schwenningen (DE); GRULER, Fabian, 78554 Aixheim (DE); SYNOVZIK, Wilfried, 78183 Hüfingen (DE)
(74) Vertreter: Westphal, Mussgnug & Partner Patentanwälte mbB

(56) Entgegenhaltungen:
- US-A1- 2005 258 683
- US-A1- 2010 212 461

## Beschreibung

Die vorliegende Erfindung betrifft eine Verriegelungsvorrichtung einer Parkbremse mit den Merkmalen des Patentanspruchs 1 sowie eine Parkbremse mit den Merkmalen des Patentanspruchs 21.

Parkbremsen sind aus dem Stand der Technik in unterschiedlichen Ausgestaltungen vorbekannt. Die aus dem Stand der Technik bekannten Parkbremsen können in mehrere Kategorien unterteilt werden, beispielsweise trockene Parkbremsen, hydraulische Parkbremsen oder Handbremsen. Eine Parkbremse wird immer dann betätigt, wenn ein Kraftfahrzeug über eine längere Zeit an einer Position stehen bleiben soll. Während eine Handbremse einen mechanisch betätigbaren Hebel umfasst, welcher durch Kopplungsmittel mit der Bremse eines Rades oder einer Achse verbunden ist, werden trockene Parkbremsen oder hydraulische Parkbremsen überwiegend elektrisch angesteuert. Hydraulische Parkbremsen verwenden zum Feststellen des Fahrzeuges einen Hydraulikzylinder, wobei der Hydraulikdruck für das Zustellen der hydraulischen Parkbremse gewöhnlich durch den Ölkreislauf des Kraftfahrzeugs zur Verfügung gestellt wird. Trockene Parkbremsen können rein elektrisch betrieben werden und umfassen einen elektrischen Motor, durch den die Bremse an dem jeweiligen Reifen oder der jeweiligen Achse angezogen und wieder gelöst werden kann. Durch das Dokument US 2005/258683 A1 ist eine Feststellbremse mit einer Sperrklinke bekannt.

Um sicherzustellen, dass die Parkbremsen zu jeder Zeit das Kraftfahrzeug ausreichend bremsen, müssen insbesondere trockene Parkbremsen im stehenden Zustand des Fahrzeugs nachgezogen werden, um auch im abgekühlten Zustand der beteiligten Bauteile eine ausreichend hohe Bremskraft zur Verfügung zu stellen, damit das Kraftfahrzeug an seiner Position verbleibt.

Derartige Parkbremsen haben sich in der Vergangenheit bewährt, jedoch muss bei trockenen Parkbremsen mit erheblichem Aufwand sichergestellt werden, dass sich diese nicht unbeabsichtigt öffnen. Hierzu werden unter anderem Verriegelungsvorrichtungen verwendet, welche sich einerseits als unzuverlässig und fehleranfällig erwiesen haben und andererseits hohe Reaktionszeiten aufweisen, wodurch insbesondere das Öffnen der Parkbremse zum Fortsetzen der Fahrt verzögert erfolgt.

Hier setzt die vorliegende Erfindung an.

Die vorliegende Erfindung stellt sich der Aufgabe, eine verbesserte Verriegelungsvorrichtung einer Parkbremse sowie eine verbesserte Parkbremse vorzuschlagen, die in zweckmäßiger Weise die Nachteile der aus dem Stand der Technik bekannten Parkbremsen beseitigt und eine zuverlässige Aufrechterhaltung der Bremskraft ermöglicht. Sowohl die Verriegelungsvorrichtung als auch die Parkbremse sollen eine kleine und kompakte Bauweise aufweisen, vollständig elektrisch betätigbar sein und eine schnelle Reaktionszeit aufweisen.

Diese Aufgaben werden durch eine Verriegelungsvorrichtung einer Parkbremse mit den Merkmalen des Patentanspruchs 1 sowie durch eine Parkbremse mit den Merkmalen des Patentanspruchs 21 gelöst.

Vorteilhafte Weiterbildungen der vorliegenden Erfindung werden in den Unteransprüchen angegeben.

Die erfindungsgemäße Verriegelungsvorrichtung einer Parkbremse mit den Merkmalen des Patentanspruchs 1 weist ein um eine Drehachse bewegliches Klinkenrad und mindestens zwei Sperrklinken auf, wobei die Sperrklinken zum einseitigen Sperren oder Blockieren des Klinkenrads in das Klinkenrad eingreifen können. Darüber hinaus weist die erfindungsgemäße Verriegelungsvorrichtung eine Stelleinrichtung und ein Kopplungselement auf, wobei das Kopplungselement die mindestens zwei Sperrklinken mit der Stelleinrichtung koppelt. Weiterhin ist es vorgesehen, dass das Kopplungselement durch die Stelleinrichtung in eine erste Stellung beweglich ist, in der die mindestens zwei Sperrklinken eine Drehung des Klinkenrads in eine erste Drehrichtung und eine zweite Drehrichtung zulassen, und in eine zweite Stellung, in der die mindestens zwei Sperrklinken in das Klinkenrad eingreifen können und eine Drehung des Klinkenrads in ausschließlich die erste Drehrichtung zulassen.

Der Erfindung liegt die Idee zugrunde, dass die Sperrklinken in der ersten Stellung des Kopplungselements nicht in das Klinkenrad eingreifen können und folglich aus dem Klinkenrad ausgedrückt sind. Die Sperrklinken können jedoch zum Schließen der Parkbremse durch eine Zustellung des Kopplungselements aus der ersten Stellung in die zweite Stellung überführt werden. In der zweiten Stellung des Kopplungselements ist ausschließlich eine Drehung des Klinkenrades um die Drehachse zum Schließen oder zum Nachziehen der Parkbremse möglich. Durch eine erneute Zustellung des Kopplungselements in die erste Stellung kann die Sperrung des Klinkenrades wieder aufgehoben.

Das Klinkenrad ist im Zusammenhang mit dieser Erfindung ein Ritzel mit einer Verzahnung, die beispielsweise sägezahnförmige Zähne aufweist. Das Klinkenrad kann eine Vielzahl von Zähnen aufweisen, wobei die Zähne vorzugsweise über den Umfang um die Drehachse in einem gleichbleibenden Winkel, dem sogenannten Teilungswinkel, angeordnet sein können. Die Anzahl der Zähne des Klinkenrads kann eine gerade oder ungerade Zahl sein.

Weiterhin kann die Verzahnung so ausgestaltet sein, dass die mindestens zwei Sperrklinken relativ zu jeweils einem Zahn der Verzahnung des Klinkenrads einem unterschiedlichen Teilungswinkeln τ angeordnet ist. Sind beispielweise zwei Sperrklinken vorgesehen, kann eine der beiden Sperrklinken um ½ τ versetzt angeordnet sein. Ist eine Anzahl n Sperrklinken vorgesehen, können die Sperrklinken jeweils um 1/n τ versetzt angeordnet sein. Dies bedeutet bei drei Sperrklinken einen Versatz von 1/3 τ und 2/3 τ und bei vier Sperrklinken einen Versatz von ¼ τ, ½ τ, ¾ τ. Auch können mehrere Sperrklinken redundant angeordnet sind und gleichzeitig in das Klinkenrad eingreifen oder ausgedrückt werden. Durch diese Anordnung steht bei einer Drehung des Klinkenrads in der ersten Drehrichtung stets mindestens eines der mindestens zwei Sperrklinken im Eingriff, wodurch ausschließlich ein Freilauf in die erste Drehrichtung des Klinkenrads ermöglicht ist. Die Zahnform soll das Nachspannen der Parkbremse erleichtern. Die jeweilige Sperrklinke weist ein Gegenprofil auf, welches mindestens einen Sperrzahn umfasst, dessen Form an die Verzahnung des Klinkenrads angepasst ist. Die Form des Sperrzahns ist dabei derart gewählt, dass der Sperrzahn in der ersten Drehrichtung des Klinkenrads durch einen Zahnrücken außer Eingriff gedrückt werden kann und in der zweiten Drehrichtung in einen Zahnzwischenraum zwischen zwei Zähnen des Klinkenrads eingezogen wird und eine Drehung des Klinkenrads blockiert bzw. sperrt. Der jeweilige Zahn weist hierzu eine entsprechend geformte Zahnbrust aus.

Gemäß einer weiteren Ausgestaltung der vorliegenden Erfindung sind die mindestens zwei Sperrklinken um die Drehachse und relativ zu dem Klinkenrad derart angeordnet, dass in der zweiten Stellung des Kopplungselements die mindestens zwei Sperrklinken bei einer Drehung des Klinkenrads in die erste Drehrichtung abwechselnd in das Klinkenrad eingreifen und außer Eingriff gedrückt werden. Durch das abwechselnde Eingreifen der mindestens zwei Sperrklinken in das Klinkenrad ist zu jedem Zeitpunkt sichergestellt, dass das Klinkenrad in die zweite Drehrichtung blockiert ist. Insbesondere hat es sich als vorteilhaft erwiesen, wenn die mindestens zwei Sperrklinken zu der Verzahnung des Klinkenrads in unterschiedlichen Teilungswinkeln angeordnet sind. Beispielsweise sind die Sperrklinken bezogen auf einen beliebigen Zahn des Klinkenrads um eine halbe Zahnteilung versetzt angeordnet, wonach immer eine der mindestens zwei Sperrklinken in Eingriff zwischen zwei Zähnen des Klinkenrads steht, währenddessen die andere der mindestens zwei Sperrklinken außer Eingriff ist. Für den Fall, dass mehr als zwei Sperrklinken vorgesehen sind, können mehrere Sperrklinken entweder redundant in das Klinkenrad gleichzeitig eingreifen und/oder über einen entsprechend kleineren Anteil des Teilungswinkels versetzt angeordnet sein. So können für den Fall, dass drei Sperrklinken vorgesehen sind, diese um ein Drittel des Teilungswinkels bezogen auf die Verzahnung des Klinkenrads versetzt angeordnet sein.

Eine vorteilhafte Ausgestaltung der vorliegenden Erfindung sieht vor, dass die mindestens zwei Sperrklinken im Umfang um die Drehachse verteilt angeordnet sind. Insbesondere hat es sich als vorteilhaft erwiesen, wenn die mindestens zwei Sperrklinken umfangssymmetrisch um die Drehachse verteilt angeordnet sind, und die Anzahl i der Zähne des Klinkenrads eine ungerade Zahl ist. Dadurch kann sichergestellt werden, dass zu jeder Winkelstellung des Klinkenrads (in der zweiten Stellung des Kopplungselements) zumindest eine der mindestens zwei Sperrklinken in Eingriff zwischen zwei Zähnen des Klinkenrads steht.

Nach Maßgabe einer weiteren Ausgestaltung der vorliegenden Erfindung sind die mindestens zwei Sperrklinken um jeweils eine Schwenkachse verschwenkbar, wobei vorzugsweise die jeweilige Schwenkachse parallel und beabstandet zu der Drehachse des Klinkenrads angeordnet ist.

Auch hat es sich als vorteilhaft erwiesen, wenn mindestens eine Vorspannung vorgesehen ist, durch die mindestens eine der mindestens zwei Sperrklinken gegen das Klinkenrad gedrückt wird. Die Vorspannung kann durch eine Rückstellfeder bewerkstelligt werden, wodurch mindestens eine der mindestens zwei Sperrklinken zumindest in der zweiten Stellung des Kopplungselements derart vorspannt, dass das Ausdrücken der mindestens einen der mindestens zwei Sperrklinken entgegen einer Federkraft erfolgen kann. Ein unbeabsichtigtes Lösen oder ein unbeabsichtigtes Ausdrücken der mindestens einen der mindestens zwei Sperrklinken aus dem Eingriff kann somit verhindert werden.

Gemäß einer Weiterbildung einer der zuvor beschriebenen Ausgestaltungen können mindestens eine der mindestens zwei Sperrklinken und das Kopplungselement über eine Führungsnase und eine Kulissenführung gekoppelt sein, wobei die Führungsnase in die Kulissenführung greift. Bevorzugt ist die Kulissenführung an dem Kopplungselement ausgebildet und zumindest eine der mindestens zwei Sperrklinken weist eine Führungsnase auf. Die Kulissenführung kann derart ausgestaltet sein, dass in der ersten Stellung des Kopplungselements die mindestens zwei Sperrklinken aus dem Klinkenrad zwangsgeführt ausgedrückt sind und somit eine Drehung des Klinkenrads sowohl in die erste Drehrichtung als auch in die zweite Drehrichtung möglich ist. In der zweiten Stellung des Kopplungselements können die mindestens zwei Sperrklinken in das Klinkenrad eingreifen. Bei einer Drehung in der ersten Drehrichtung des Klinkenrads wird eine der mindestens zwei Sperrklinken ratschenähnlich, bevorzugt gegen die Federkraft der Vorspannung, aus dem Eingriff gedrückt und kann anschließend in einen in der Umlaufrichtung folgenden Zahnzwischenraum eingreifen.

Eine bevorzugte Ausgestaltung der vorliegenden Erfindung sieht vor, dass die Kulissenführung L-förmig mit einem ersten Abschnitt und einem zweiten Abschnitt ausgebildet ist, und dass der erste Abschnitt in einer Umlaufrichtung um die Drehachse angeordnet ist und eine Relativposition der Führungsnase in einer Radialrichtung - bezogen auf die Drehachse - zwangsgeführt vorgibt. Der zweite Abschnitt kann in einer Radialrichtung - bezogen auf die Drehachse - angeordnet sein und ermöglicht näherungsweise in der Radialrichtung eine freie Relativbewegung der Führungsnase.

Darüber hinaus hat es sich als vorteilhaft erwiesen, wenn das Kopplungselement um die Drehachse drehbar angeordnet ist. Das Kopplungselement ist vorzugsweise koaxial zu dem Klinkenrad angeordnet.

Weiterhin hat es sich als vorteilhaft erwiesen, wenn das Kopplungselement ringförmig ist. Somit kann das Kopplungselement nach Art eines Synchronringes die Sperrklinken mit der Stelleinheit koppeln. Insbesondere ist es vorteilhaft, wenn das Kopplungselement einen offenen oder geschlossenen Ring ausbildet, durch den die über den Umfang verteilten Sperrklinken verbunden werden und durch das eine Synchronisierung der Sperrklinken möglich ist.

Eine weitere Ausgestaltung der Verriegelungsvorrichtung gemäß der vorliegenden Erfindung sieht vor, dass die Stelleinrichtung ein Linearantrieb ist. Die Stelleinrichtung kann über ein entsprechendes Verbindungsmittel, z.B. einen Hebel, mit dem Kopplungselement verbunden werden, wodurch die Linearbewegung der Stelleinrichtung in eine Bewegung, bevorzugt eine Drehbewegung, des Kopplungselements gewandelt werden kann.

Insbesondere hat es sich als vorteilhaft erwiesen, wenn die Stelleinrichtung einen Hubmagnet umfasst, wobei bevorzugt der Hubmagnet zwei stabile Endlagen aufweist und der Hubmagnet derart mit dem Kopplungselement verbunden ist, dass der Hubmagnet sowohl in der ersten Stellung als auch in der zweiten Stellung des Kopplungselements in einer stabilen Endlage gehalten ist. Der Hubmagnet ermöglicht eine besonders schnelle Entriegelung und Verriegelung der Verriegelungsvorrichtung, wodurch das Öffnen der Verriegelungsvorrichtung bzw. der Parkbremse ohne nennenswerte Verzögerung erfolgen kann. Entsprechend weist eine solche Parkbremse eine besonders kurze Reaktionszeit auf.

Darüber hinaus wird durch den bistabilen Hubmagnet das Kopplungselement in der ersten Stellung und in der zweiten Stellung permanentmagnetisch gehalten und eine Bestromung ist nur zum Öffnen oder Entsperren der Verriegelungsvorrichtung notwendig. Im stromlosen und spannungsfreien Zustand verbleibt die Verriegelungsvorrichtung im geöffneten oder verriegelten Zustand. Im Falle einer Störung, z.B.in der Stromversorgung kann ein unbeabsichtigtes Öffnen oder Schließen der Verriegelungsvorrichtung nicht erfolgen.

Auch kann es von Vorteil sein, wenn eine Lagesicherung vorgesehen ist, die das Kopplungselement sowohl in der ersten Stellung als auch in der zweiten Stellung gesichert hält. Die Lagesicherung soll eine unbeabsichtigte Änderung der Stellung des Kopplungselements verhindern und kann beispielsweise einen federgehaltenen Sperrbügel umfassen, der beim Überschreiten einer vordefinierten Zustellkraft bzw. eines Zustellmoments an dem Kopplungselement aus einem Formschluss ausgedrückt wird und das Kopplungselement freigibt. Dabei kann es vorteilhaft sein, wenn die Lagesicherung das Kopplungselement in zumindest einer der beiden Stellung sichert, vorzugsweise im Fahrbetrieb des Kraftfahrzeuges in der ersten Stellung.

Nach Maßgabe einer bevorzugten Weiterbildung der vorliegenden Erfindung kann wenigstens ein Sensor vorgesehen sein, der erfassen kann, ob das Klinkenrad freigegeben ist oder nicht. Insbesondere ist es bevorzugt, wenn der wenigstens eine Sensor die Stellung der Stelleinrichtung und/oder die Position des Kopplungselements erfasst. Weiterhin ist es vorteilhaft, wenn der wenigstens eine Sensor erfasst, ob mindestens eine der mindestens zwei Sperrklinken in das Klinkenrad eingreift oder dieses freigibt. Eine Ausgestaltung kann vorsehen, dass die mindestens zwei Sperrklinken durch den wenigstens einen Sensor unabhängig voneinander überwacht werden, um beispielsweise bei einer Drehung des Klinkenrads in die erste Richtung auflösen zu können, dass eine Drehung in die zweite Richtung gesperrt ist und stets mindestens eines der mindestens zwei Klinkenräder in Eingriff mit dem Klinkenrad steht.

Der wenigstens eine Sensor kann weiterhin ein induktive, kapazitive, optische und magnetische Sensorik umfassen. Insbesondere ist es bevorzugt, wenn die magnetische Sensorik einen oder mehrere Hall-Sensoren umfasst. Sowohl das Kopplungselement als auch mindestens eine der mindestens zwei Sperrklinken können entsprechende Mittel aufweisen, durch die die Sensorik die Zustände erfassen kann. Beispielsweise kann das Kopplungselement und/oder mindestens eine der mindestens zwei Sperrklinken einen Reflektor, Magneten o.Ä. aufweisen, durch die die Sensorik eine Änderung der Position der entsprechenden Bauteile erfassen kann. In einer bevorzugten Ausgestaltung der vorliegenden Erfindung kann sowohl die Stellung des Kopplungselements als auch die Stellung der Sperrklinken erfasst werden, wobei sowohl für die jeweilige Sperrklinke als auch für das Kopplungselement ein Hallsensor vorgesehen wird und die mindestens zwei Sperrklinken als auch das Kopplungselement einen Permanentmagneten aufweisen.

Eine weitere vorteilhafte Ausgestaltung der vorliegenden Erfindung sieht vor, dass ein Gehäuse vorgesehen ist, und dass die mindestens zwei Sperrklinken und/oder das Kopplungselement an dem Gehäuse gelagert gehalten sind. Insbesondere ist es bevorzugt, wenn das Gehäuse ein Hybridbauteil aus zwei unterschiedlichen Werkstoffen ist, wobei vorzugsweise das Gehäuse aus einem gestanzten ersten Bestandteil, bevorzugt aus Metall, und einem zweiten Bestandteil, bevorzugt aus Kunststoff, besteht, wodurch sich Kostenersparnisse als auch eine Gewichtsreduktion ergeben können. Das Gehäuse kann den Bremsaktuator intergieren, wonach eine kompakte Bremseinheit bereitgestellt werden kann.

Gemäß einer weiteren vorteilhaften Ausgestaltung der vorliegenden Erfindung sind bzw. ist der wenigstens eine Sensor und/oder eine Steuerung der Stelleinrichtung gehäuseseitig angeordnet. Insbesondere ist es bevorzugt, wenn die Verriegelungseinrichtung eine Schnittstelle aufweist, durch die die Versorgung mit elektrischer Energie als auch eine Zustandsrückmeldung der Verriegelungsvorrichtung erfolgen kann. Dadurch ergibt sich eine in sich geschlossene Einheit und die Verriegelungsvorrichtung kann modular und vormontiert in einer Parkbremse montiert werden.

Ein weiterer Aspekt der vorliegenden Erfindung betrifft eine, bevorzugt ausschließlich elektrische, Parkbremse, aufweisend einen die eine Bremse betätigenden Elektromotor und eine erfindungsgemäßen Verriegelungsvorrichtung.

Eine Weiterbildung der Parkbremse sieht vor, dass eine Temperaturerfassung der Bremse vorgesehen ist. Sobald das Kraftfahrzeug abgestellt wird und die Bremse abkühlt, kann der Elektromotor die Bremse nachziehen und thermische Dehnungen kompensieren.

Nachfolgend wird unter Bezugnahme auf die begleitenden Zeichnungen ein Ausführungsbeispiel einer erfindungsgemäßen Verriegelungsvorrichtung einer Parkbremse im Detail beschrieben. Es zeigen:
- Figur 1:: eine stark vereinfachte und schematische Explosionsdarstellung einer erfindungsgemäßen Verriegelungsvorrichtung mit einem Klinkenrad, zwei Sperrklinken, einem Kopplungselement und einer Stelleinrichtung,
- Figur 2: eine stark vereinfachte und teilweise transparente Darstellung der Verriegelungsvorrichtung gemäß Figur 1 in einer ersten Stellung, wobei die Sperrklinken eine Drehung des Klinkenrads in eine erste Drehrichtung und eine zweite Drehrichtung zulassen, und
- Figur 3: eine stark vereinfachte und teilweise transparente Darstellung der Verriegelungsvorrichtung gemäß Figur 2 in einer zweiten Stellung, wobei die Sperrklinken eine Drehung des Klinkenrads ausschließlich in die erste Drehrichtung zulassen,
- Figur 4: eine vereinfachte und schematische Draufsicht auf das Kopplungselement,
- Figur 5a: eine Draufsicht auf eines der mindestens zwei Sperrklinken,
- Figur 5b: eine Seitenansicht auf die Sperrklinke gemäß Figur 5a,
- Figur 6a: eine vereinfachte Draufsicht auf eine erste Gehäusehälfte des Gehäuses, und
- Figur 6b: eine vereinfachte Draufsicht auf eine zweite Gehäusehälfte des Gehäuses.

Nachfolgend werden gleiche oder funktional gleiche Bauteile in dem einem Ausführungsbeispiel mit gleichen Bezugszeichen gekennzeichnet. Der Übersichtlichkeit halber sind in den einzelnen Figuren nicht alle gleichen oder funktional gleichen Teile mit einer Bezugsziffer versehen.

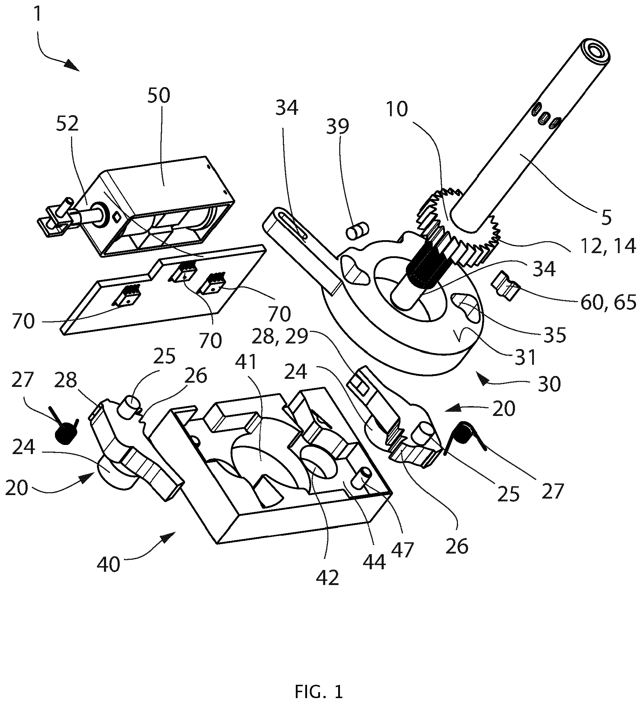

Der stark vereinfachten Explosionsdarstellung gemäß Figur 1 ist eine erfindungsgemäße Verriegelungsvorrichtung 1 zu entnehmen. Die Verriegelungsvorrichtung 1 ist Bestandteil einer (nicht vollständig dargestellten) Parkbremse eines Kraftfahrzeuges, die eingerichtet ist, eine Bremse eines Rades oder einer Achse anzuziehen oder zu lösen.

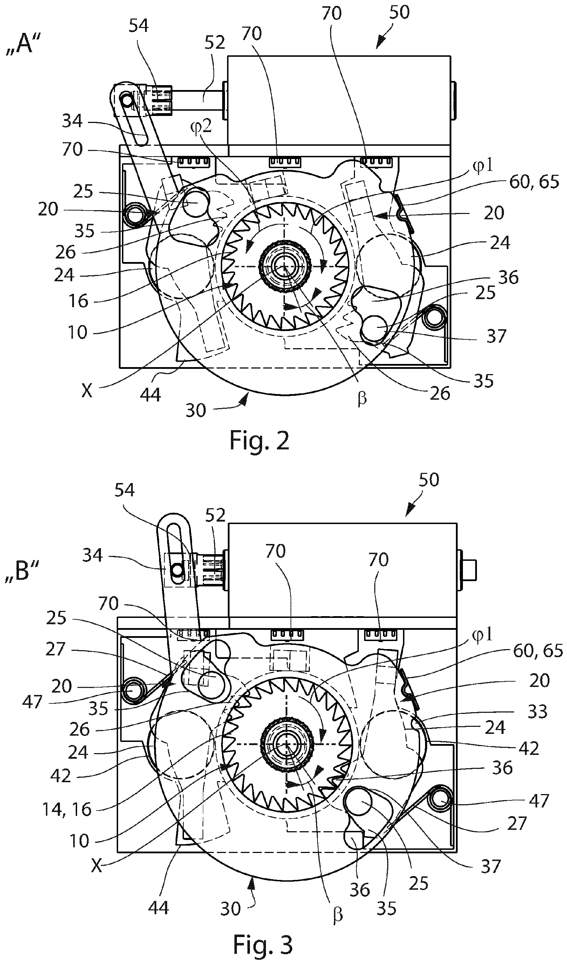

Die elektrische Parkbremse kann einen (nicht dargestellten) elektrischen Motor aufweisen, der über eine Antriebswelle 5 mit der Bremse verbunden ist, wobei die Antriebswelle 5 um eine Drehachse X in eine erste Drehrichtung ϕ1 zum Anziehen der Bremse gedreht werden kann und in eine zweite Drehrichtung ϕ2 zum Lösen der Bremse. Die jeweilige Drehrichtung ϕ1 und ϕ2 ist in den Figuren 2 und 3 mittels einer Pfeillinie angedeutet.

Die Verriegelungsvorrichtung 1 umfasst ein um die Drehachse X bewegliches Klinkenrad 10 und mindestens zwei Sperrklinken 20, die zum Festlegen bzw. Sperren des Klinkenrads 10 in das Klinkenrad 10 eingreifen können. Weiterhin umfasst die Verriegelungsvorrichtung 1 ein Kopplungselement 30 und eine Stelleinrichtung 50, wobei das Kopplungselement 30 die mindestens zwei Sperrklinken 20 mit der Stelleinrichtung 50 koppelt.

Die mindestens zwei Sperrklinken 20 und das Kopplungselement 30 können in einem Gehäuse 40 angeordnet sein, wobei das Gehäuse 40 eine Durchgangsöffnung 41 aufweist, durch die koaxial die Antriebswelle 5 geführt wird.

Das Klinkenrad 10 ist nach Art eines Ritzels mit einer Verzahnung 12 mit einer Anzahl i von Zähnen 14 ausgestattet, wobei die Anzahl i im dargestellten beispielhaften Ausführungsbeispiel eine ungerade Zahl ist, i = 27. Die Zähne 14 sind sägezahnförmig ausgebildet, wobei die Zähne 14 bevorzugt in der Umlaufrichtung um die Drehachse X in einem gleichbleibenden Winkel, dem sogenannten Teilungswinkel τ, angeordnet sind. Der jeweilige Zahn 14 weist eine Zahnbrust und einen Zahnrücken auf, die sich in einer Zahnspitze treffen. Zwischen zwei benachbarten Zahnspitzen ist der sogenannte Zahnzwischenraum ausgebildet. Der Zahnrücken weist in die erste Drehrichtung ϕ1 und die Zahnbrust in die zweite Drehrichtung ϕ2, wodurch die Verzahnung 12 in Analogie zu einem Sägezahn als Bezahnungsart "Stark auf Stoß" bezeichnet werden kann und der Schnittwinkel kleiner 90° beträgt. Anders ausgedrückt, bildet die Zahnbrust eine Hinterschneidung aus.

Das Klinkenrad 10 ist drehfest mit der Antriebswelle 5 gekoppelt.

Um das Klinkenrad 10 bzw. um die Drehachse X sind vorliegend zwei, vorzugsweise baugleiche, Sperrklinken 20 angeordnet, die um jeweils eine Schwenkachse X2 verschwenkbar sind. Die jeweilige Schwenkachse X2 ist bevorzugt parallel und beabstandet zu der Drehachse X angeordnet.

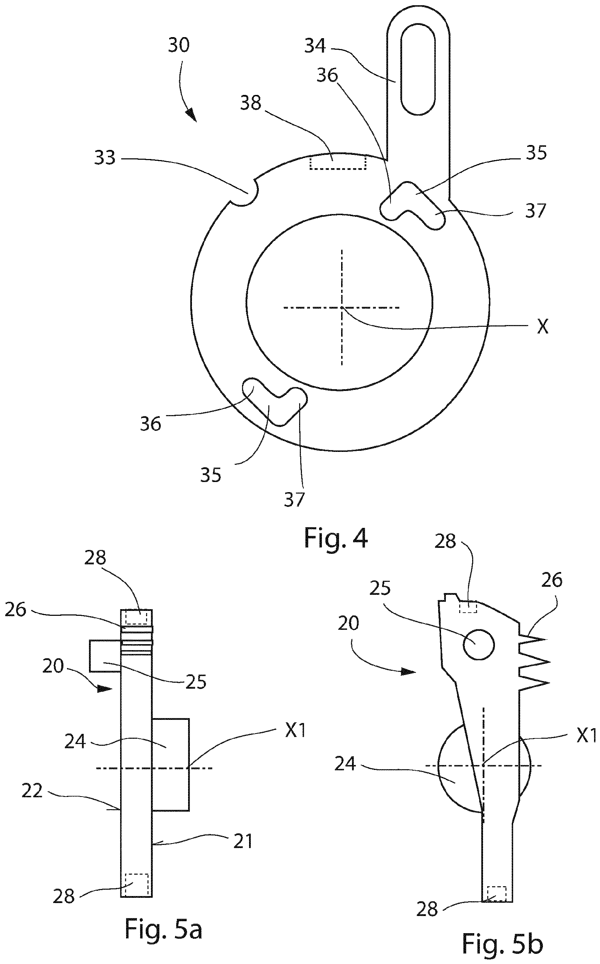

Die Sperrklinke 20, welche detailliert in den Figuren 5a und 5b dargestellt ist, weist eine erste Seite 21 und eine zweite Seite 22 auf, und kann aus einem metallischen Werkstoff, insbesondere in einem Siebdruckverfahren, hergestellt sein. Auf der ersten Seite 21 steht von der Sperrklinke 20 ein Lagerzapfen 24 ab und auf der zweiten Seite 22 eine Führungsnase 25, wobei sowohl der Lagerzapfen 24 als auch die Führungsnase 25 zylinderförmig ausgebildet sein können. Der Durchmesser des Lagerzapfens 24 beträgt ein Vielfaches, des Durchmessers der Führungsnase 25.

Wie detailliert im Weiteren noch beschrieben werden wird, wird die jeweilige Sperrklinke 20 um die Schwenkachse X2 drehbeweglich an dem Gehäuse 40 abgestützt, wobei die Sperrklinke 20 wippenförmig mit einem ersten Endbereich und einem zweiten Endbereich ausgebildet ist, die radial von der Schwenkachse X2 diametral angeordnet ausgebildet sind. In dem ersten Endbereich ist die bereits zuvor erwähnte Führungsnase 25 auf der zweiten Seite 22 angeordnet und weiterhin ein oder mehrere Sperrzähne 26. Die Sperrzähne 26 stehen in einer Umlaufrichtung um die Schwenkachse X2 ab und sind an die Form der Zähne 14 der Verzahnung 12 des Klinkenrads 10 angepasst.

Sowohl in dem ersten Endbereich als auch in dem zweiten Endbereich können - durch in den Figuren 5a und 5b mit punktierten Linien dargestellte - Taschen 28 ausgebildet sein, die für die Aufnahme beispielsweise einer später im Detail noch beschriebenen Sensorik bzw. Magnete 39 ausgebildet sein können.

Das Kopplungselement 30, detailliert in Figur 4 gezeigt, weist einen im Wesentlichen ringförmigen Abschnitt nach Art eines Synchronringes auf. Auf diametral angeordneten Seiten sind in den ringförmigen Abschnitt L-förmige Kulissenführungen 35 mit einem ersten Abschnitt 36 und einem zweiten Abschnitt 37 angeordnet. Die Kulissenführung 35 kann als Nut in das Kopplungselement 30 eingearbeitet oder eingeformt sein, wobei die Kulissenführung 35 derart an die Führungsnase 25 der jeweiligen Sperrklinke 20 angepasst ist, dass die Führungsnase 25 in der Kulissenführung 35 zwangsgeführt werden kann.

Von dem ringförmigen Abschnitt des Kopplungselements 30 steht ein Verbindungsmittel 34 stabförmig ab. In einem Bereich eines freien Endes des Verbindungsmittels 34 kann ein das Verbindungsmittel 34 durchbrechendes Langloch ausgebildet sein.

Weiterhin kann das Kopplungselement 30 eine Tasche 28 aufweisen, welche für die Aufnahme einer später noch im Detail beschriebenen Sensorik ausgebildet sein kann. Auch kann das Kopplungselement 30 eine Aussparung 33 aufweisen, in die in Bezug auf die Drehachse X in radialer Richtung ein Sperrbügel 65 einer später noch in Detail beschriebenen Lagesicherung 60 eingreifen kann.

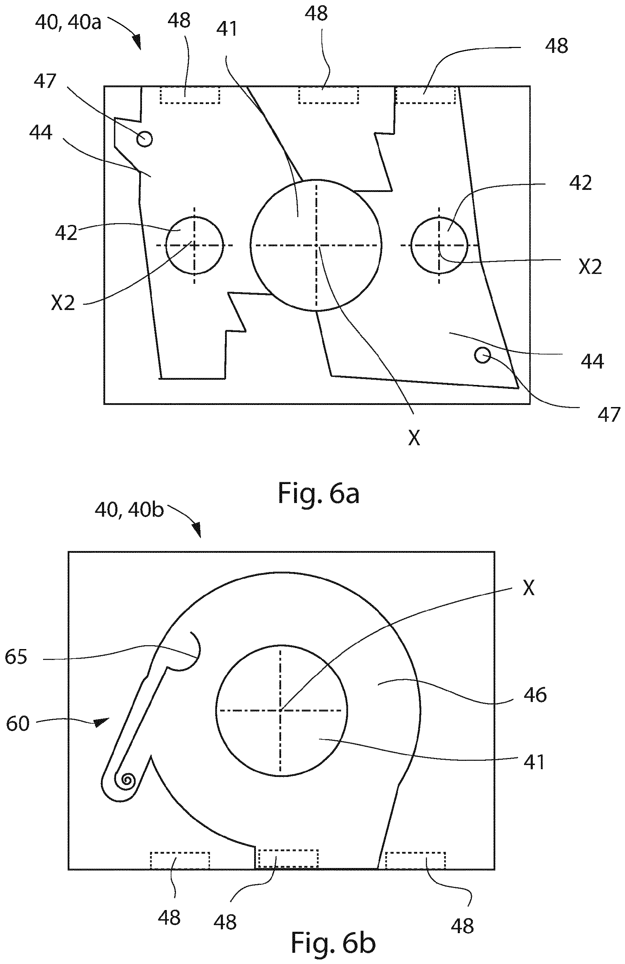

Das Gehäuse 40 kann einteilig oder aus mehreren Gehäusehälften 40a, 40b als Hybridbauteil hergestellt sein, wobei eine erste Gehäusehälfte 40a in der Figur 6A dargestellt ist und die zweite Gehäusehälfte 40b in der Figur 6B. Beiden Gehäusehälften 40a, 40b ist gemeinsam, dass diese eine Durchgangsöffnung 41 aufweisen und auf einer Innenseite jeweils mindestens eine Ausnehmung 44, 46 aufweisen. In der ersten Gehäusehälfte 40a gemäß Figur 6a sind auf diametralen Seiten um die Drehachse X2 Lagerzapfenaufnahmen 42 angeordnet, die an die Größe der Lagerzapfen 24 der Sperrklinken 20 angepasst sind. Weiterhin ist aus der Figur 6A ersichtlich, dass um die Lagerzapfenaufnahme 42 die erste Ausnehmung 44 ausgebildet ist, wobei die erste Ausnehmung 44 konfiguriert ist, die Sperrklinken 20 aufzunehmen. Die Ausnehmung 44 kann so bemessen sein, dass die Führungsnase 25 der jeweiligen Sperrklinke 20 herausragt. Die Form und Größe der ersten Ausnehmung 44 berücksichtigt, dass die Sperrklinke 20 um die durch die Lagerzapfenaufnahme 42 und den Lagerzapfen 24 gebildete Schwenkachse X2 verschwenkbar ist. Weiterhin können Federaufnahmen 47 vorgesehen sein, an denen jeweils eine Rückstellfeder 27 befestigt werden kann.

Die zweite Gehäusehälfte 40b gemäß Figur 6b weist die zweite Ausnehmung 46 auf, welche näherungsweise koaxial zu der Durchgangsöffnung 41 ausgebildet ist und an den ringförmigen Abschnitt des Kopplungselements 30 angepasst ist. In der zweiten Ausnehmung 46 kann der ringförmige Abschnitt des Kopplungselements 30 koaxial zu der Drehachse X gelagert werden, wodurch das Kopplungselement 30 um die Drehachse X in dem Gehäuse 40 drehbar gelagert gehalten ist.

Die Gehäuse 40 kann auf einer Seite ein oder mehrere Sensortaschen 48 aufweisen, die einen Sensor 70 aufnehmen können. Die Sensortaschen 48 können sowohl in der ersten Gehäusehälfte 40a und/oder in der zweiten Gehäusehälfte 40b angeordnet sein und sind mit punktierten Linien in den Figuren 6a und 6b angedeutet.

Weiterhin wird in Figur 6b die Lagesicherung 60 gezeigt, welche einen federgespannten Sperrbügel 65 umfasst, der eingerichtet ist, in der ersten Stellung A und/oder in der zweiten Stellung B in die Aussparung 33 des Kopplungselements 30 zu greifen und dieses zu arretieren.

Die Stelleinrichtung 50 kann ein beliebiger Antrieb sein, durch den das Kopplungselement 30 um die Drehachse X von einer ersten Stellung A in eine zweite Stellung B verstellt werden kann. In dem dargestellten Ausführungsbeispiel umfasst die Stelleinrichtung 50 einen Hubmagneten mit zwei stabilen Endlagen, der sich dadurch auszeichnet, dass ein Stößel 52 von der Stelleinrichtung 50 in einer ersten Endlage, dargestellt in Figur 3, in eine zweite Endlage, dargestellt in Figur 2, permanentmagnetisch gehalten werden kann. Der Stößel 52 weist an einem freien Ende Verbindungsmittel 54 auf, durch die eine Zustellbewegung auf das Kopplungselement 30 übertragen werden kann. Bei einer Bestromung der Stelleinrichtung 50 wird die permanentmagnetische Haltekraft in der jeweiligen Endlage gelöst und der Stößel in die jeweils andere Endlage verfahren. Der Hubmagnet ermöglicht dabei eine besonders schnelle Zustellung der Stelleinrichtung 50.

Weiter unter Bezugnahme auf die Figuren 2 und 3 ist ersichtlich, dass die Stelleinrichtung 50 über die Verbindungsmittel 34, 54 das Kopplungselement 30 von einer ersten Stellung A in eine zweite Stellung B um die Drehachse X verdrehen kann und vice versa. In dem dort dargestellten montierten Zustand der Verriegelungseinrichtung 1 greift die jeweilige Führungsnase 25 der Sperrklinke 20 in die Kulissenführung 35 des Kopplungselements 30.

In dem ersten Stellung A gemäß Figur 2 ist die Führungsnase 25 der Sperrklinke 20 in dem ersten Abschnitt 36 der Kulissenführung 35 angeordnet. Die Rückstellfeder 27 spannt die Sperrklinke 20 in Richtung des Klinkenrades 10 vor. Die Führungsnase 25 liegt an der Kulissenführung 35 an und die Sperrklinke 20 ist aus dem Klinkenrad 10 entgegen der Vorspannung der Rückstellfeder 27 ausgedrückt, weshalb die Sperrzähne 26 nicht in das Klinkenrad 10 eingreifen können. In dieser ersten Stellung A des Kopplungselements 30 geben die mindestens zwei Sperrklinken 20 eine Drehung des Klinkenrads 10 sowohl in die erste Drehrichtung ϕ1 als auch in die zweite Drehrichtung ϕ2 frei.

In der zweiten Stellung B gemäß Figur 3 ist die jeweilige Führungsnase 25 der Sperrklinke 20 in dem zweiten Abschnitt 37 der Kulissenführung 35 angeordnet. Die Führungsnase 25 ist in dem zweiten Abschnitt 37 der Kulissenführung 35 in radialer Richtung - bzw. um die Schwenkachse X2 - beweglich, und die jeweilige Sperrklinke 20 kann durch eine entsprechende Federkraft der Rückstellfeder 27 in das Klinkenrad 10 eingedrückt werden oder bei einer Drehung in die erste Drehrichtung ϕ1 durch ein Ausdrücken an dem Zahnrücken ausgedrückt werden. In der zweiten Stellung B ist ausschließlich eine Drehung in der ersten Drehrichtung ϕ1 möglich, weshalb in der zweiten Stellung B der Freilauf beispielsweise ein Nachziehen der Parkbremse möglich ist. Ein Nachziehen der Parkbremse kann immer dann erforderlich sein, wenn die zum Bremsen beteiligten Komponenten nach einer Fahrt abkühlen und eine thermische Dehnung abnimmt. Ein Lösen der Parkbremse durch eine Drehung in die zweite Drehrichtung ϕ2 ist blockiert.

Insbesondere ist aus der Figur 3 ersichtlich, dass die mindestens zwei Sperrklinken 20 in der Umlaufrichtung um die Drehachse X derart angeordnet sind, dass diese bei einer Drehung des Klinkenrads 10 in die erste Drehrichtung ϕ1 abwechselnd eingedrückt und ausgedrückt werden. Hierzu sind die Sperrklinken 20 in Bezug auf die Verzahnung 12 des Klinkenrads 10 nicht zu der Verzahnung 12 symmetrisch angeordnet, sondern um einen halben Teilungswinkeln τ versetzt angeordnet. Durch diese Anordnung der Sperrklinken 20 kann sichergestellt werden, dass in der zweiten Stellung B des Kopplungselements 30 immer eine der Sperrklinken 20 in Eingriff steht.

Um die Stellung des Kopplungselements 30 zu erfassen, kann in die Tasche 38 ein Magnet 39 eingesetzt sein, der mit einem Sensor 70 zusammenwirkt, wodurch erfasst werden kann, ob das Kopplungselement 30 in der ersten Stellung A oder der zweiten Stellung B ist. Weiterhin können in die Taschen 28 der Sperrklinken 20 Magnete 29 eingesetzt sein. Den Figuren 2 und 3 ist zu entnehmen, dass der Magnet 29 in die Tasche 28 der Sperrklinke 20 links im Bild in dem ersten Endbereich eingesetzt ist. Rechts im Bild ist der Magnet 29 in die Tasche 28 in dem zweiten Endbereich der Sperrklinke eingesetzt. Damit weisen die Magnete 29 der beiden Sperrklinken in dieselbe Raumrichtung.

Di Magnete 29 können mit weiteren Sensoren 70 zum Erfassen, ob eine Sperrklinke 20 in das Klinkenrad 10 eingreift oder nicht, zusammenwirken. Die Sensoren 70 können beispielsweise Hall-Sensoren sein, die eine Änderung des durch den entsprechenden Magneten 29, 39 erzeugten Magnetfelds erfassen können.

Um eine einfache und kompakte Bauweise zu realisieren, ist es bevorzugt, wenn die Sensoren 70 auf einer Gehäuseseite angeordnet sind. Auf dieser Gehäuseseite können die Sensoren 70 auf einer Leiterplatte oder Ähnlichem angeordnet sein. Auf dieser Leiterplatte kann eine Steuerung vorgesehen sein, wobei die Steuerung sowohl die Stelleinrichtung 50 ansteuern kann als auch die Daten der Sensoren 70.

### Bezugszeichenliste

- 1: Verriegelungsvorrichtung
- 5: Antriebswelle
- 10: Klinkenrad
- 12: Verzahnung
- 14: Zahn
- 20: Klinken
- 20: Sperrklinke
- 21: erste Seite
- 22: zweite Seite
- 24: Lagerzapfen
- 25: Führungsnase
- 26: Sperrzahn
- 27: Rückstellfeder
- 28: Tasche
- 29: Magnet
- 30: Kopplungselement
- 31: erste Seite
- 32: zweite Seite
- 33: Aussparung
- 34: Verbindungsmittel
- 35: Kulissenführung
- 36: erster Abschnitt
- 37: zweiter Abschnitt
- 38: Tasche
- 39: Magnet
- 40: Gehäuse
- 41: Durchgangsöffnung
- 42: Lagerzapfenaufnahme
- 44: erste Ausnehmung
- 46: zweite Ausnehmung
- 47: Federaufnahmen
- 48: Sensortasche

- 50: Stelleinrichtung
- 52: Stößel
- 54: Verbindungsmittel
- 55: Hubmagnet
- 60: Lagesicherung
- 65: Sperrbügel
- 70: Sensor

- A: erste Stellung
- B: zweite Stellung
- X: Drehachse
- X2: Schwenkachse

- τ: Teilungswinkel
- ϕ: erste Drehrichtung
- ϕ2: zweite Drehrichtung

## Patentansprüche

1. Verriegelungsvorrichtung (1) einer Parkbremse, aufweisend:
- ein um eine Drehachse (X) bewegliches Klinkenrad (10) mit einer Zähne (14) aufweisenden Verzahnung (12),
- mindestens zwei Sperrklinken (20), die in das Klinkenrads (10) eingreifen können,
- eine Stelleinrichtung (50), und
- ein Kopplungselement (30),
- wobei das Kopplungselement (30) die mindestens zwei Sperrklinken (20) mit der Stelleinrichtung (50) koppelt, und
- wobei das Kopplungselement (30) durch die Stelleinrichtung (50) in eine erste Stellung (A) beweglich ist, in der die mindestens zwei Sperrklinken (20) eine Drehung des Klinkenrads (10) in eine erste Drehrichtung und eine zweite Drehrichtung zulassen und eine zweite Stellung (B), in der die mindestens zwei Sperrklinken (20) in das Klinkenrad (10) eingreifen können und eine Drehung in ausschließlich die erste Drehrichtung zulassen.

2. Verriegelungsvorrichtung (1) nach Anspruch 1,
**dadurch gekennzeichnet, dass** die mindestens zwei Sperrklinken (20) relativ zu jeweils einem Zahn (14) des Klinkenrads (10) in unterschiedlichen Teilungswinkeln (τ) angeordnet sind.

3. Verriegelungsvorrichtung (1) nach Anspruch 1 oder 2,
**dadurch gekennzeichnet, dass** in der zweiten Stellung (B) bei einer Drehung des Klinkenrads (10) in die erste Drehrichtung die mindestens zwei Sperrklinken (20) abwechselnd in das Klinkenrad (10) eingreifen.

4. Verriegelungsvorrichtung (1) nach einem der Ansprüche 1 bis 3,
**dadurch gekennzeichnet, dass** die mindestens zwei Sperrklinken (20) um die Drehachse (X) umfangsverteilt angeordnet sind.

5. Verriegelungsvorrichtung (1) nach einem der Ansprüche 1 bis 4,
**dadurch gekennzeichne**t, dass die mindestens zwei Sperrklinken (20) um jeweils eine Schwenkachse (X2) verschwenkbar sind, welche vorzugsweise parallel zur der Drehachse (X) angeordnet sind.

6. Verriegelungsvorrichtung (1) nach einem der vorgenannten Ansprüche,
**dadurch gekennzeichnet, dass** mindestens eine Vorspannung vorgesehen ist, durch die mindestens eine der mindestens zwei Sperrklinken (20) gegen das Klinkenrad (10) gedrückt werden kann.

7. Verriegelungsvorrichtung (1) nach einem der vorgenannten Ansprüche,
**dadurch gekennzeichne**t, dass die mindestens zwei Sperrklinken (20) und das Kopplungselement (30) mittels einer in einer Kulissenführung (35) geführten Führungsnase (25) gekoppelt sind.

8. Verriegelungsvorrichtung (1) nach einem der vorgenannten Ansprüche,
**dadurch gekennzeichne**t, dass mindestens eine der mindestens zwei Sperrklinken (20) eine Führungsnase (25) aufweist, die beabstandet zu der Achse (X2) angeordnet ist, dass das Kopplungselement (30) eine Kulissenführung (35) aufweist, und dass die Führungsnase (25) in die Kulissenführung (35) greift.

9. Verriegelungsvorrichtung (1) nach Anspruch 7 oder 8,
**dadurch gekennzeichnet, dass** die Kulissenführung (35) L-förmig mit einem ersten Abschnitt (36) und einem zweiten Abschnitt (37) ausgebildet ist, und dass der erst Abschnitt (36) in Umfangsrichtung gerichtet ist und der zweite Abschnitt (37) in einer Radialrichtung.

10. Verriegelungsvorrichtung nach einem der vorgenannten Ansprüche,
**dadurch gekennzeichne**t, dass mindestens eine der mindestens zwei Sperrklinken (20) auf einer ersten Seite (21) einen Lagerzapfen (24) und auf der gegenüberliegenden zweiten Seite (22) die Führungsnase (25) oder die Kulissenführung (35) aufweist.

11. Verriegelungsvorrichtung (1) nach einem der vorgenannten Ansprüche,
**dadurch gekennzeichnet, dass** das Kopplungselement (30) um die Drehachse (X) drehbar ist.

12. Verriegelungsvorrichtung (1) nach einem der vorgenannten Ansprüche,
**dadurch gekennzeichne**t, dass das Kopplungselement (30) ringförmig ist.

13. Verriegelungsvorrichtung (1) nach einem der vorgenannten Ansprüche,
**dadurch gekennzeichne**t, dass die Stelleinrichtung (50) ein Linearaktor ist.

14. Verriegelungsvorrichtung (1) nach Anspruch 13,
**dadurch gekennzeichnet, dass** der Linearaktor ein Hubmagnet (55) mit zwei stabilen Endlagen ist, und/oder dass der Hubmagnet (55) derart mit dem Kopplungselement (30) verbunden ist, dass der Hubmagnet (55) sowohl in der ersten Stellung (A) als auch in der zweiten Stellung (B) des Kopplungselements (30) jeweils in einer der stabilen Endlagen ist.

15. Verriegelungsvorrichtung (1) nach einem der vorgenannten Ansprüche,
**dadurch gekennzeichnet, dass** wenigstens ein Sensor (70) vorgesehen ist, der erfassen kann, ob das Klinkenrad (10) freigegeben ist oder nicht.

16. Verriegelungsvorrichtung (1) nach Anspruch 15,
**dadurch gekennzeichnet, dass** der wenigstens eine Sensor (70) die Stellung der Stelleinrichtung (50) und/oder die Position des Kopplungselements (30) erfasst.

17. Verriegelungsvorrichtung (1) nach Anspruch 15 oder 16,
**dadurch gekennzeichnet, dass** der wenigstens eine Sensor (70) erfasst, ob mindestens eine der mindestens zwei Sperrklinken (20) in das Klinkenrad (10) greift.

18. Verriegelungsvorrichtung (1) nach einem der vorgenannten Ansprüche,
**dadurch gekennzeichnet, dass** ein Gehäuse (40) vorgesehen ist, und dass die mindestens zwei Sperrklinken (20) und/oder das Kopplungselement (30) an dem Gehäuse (40) gelagert sind.

19. Verriegelungsvorrichtung (1) nach Anspruch 18,
**dadurch gekennzeichnet, dass** das Gehäuse (40) ein Hybridbauteil aus einem Metall und einem Kunststoff ist.

20. Verriegelungsvorrichtung (1) nach einem der vorgenannten Ansprüche,
**dadurch gekennzeichnet, dass** der wenigstens eine Sensor (70) und/oder eine Steuerung der Stelleinrichtung (50) auf dem Gehäuse (40) angeordnet ist.

21. Parkbremse, aufweisend einen eine Bremse betätigenden Elektromotor und eine Verriegelungsvorrichtung (1) nach einem der vorgenannten Ansprüche.

22. Parkbremse nach Anspruch 21,
**dadurch gekennzeichnet, dass** eine Temperaturerfassung der Bremse vorgesehen ist.

## Claims

1. Locking device (1) of a parking brake, comprising:
- a ratchet wheel (10), with a toothing (12) comprising teeth (14), which is movable around an axis of rotation (X),
- at least two pawls (20), which can engage with the ratchet wheel (10),
- a positioning device (50), and
- a coupling element (30),
- wherein the coupling element (30) couples the at least two pawls (20) to the positioning device (50), and
- wherein the coupling element (30) can be moved, by means of the positioning device (50), into a first position (A), in which the at least two pawls (20) allow a rotation of the ratchet wheel (10) in a first direction of rotation and in a second direction of rotation, and a second position (B), in which the at least two pawls (20) can engage with the ratchet wheel (10) and allow a rotation in exclusively one direction of rotation.

2. Locking device (1) in accordance with claim 1,
**characterized in that**
the at least two pawls (20) are arranged at different angular pitches relative to one tooth (14) each of the ratchet wheel (10).

3. Locking device (1) in accordance with claim 1 or 2,
**characterized in that**,
in the second position (B), the at least two pawls (20) alternatingly engage with the ratchet wheel (10) in the first direction of rotation.

4. Locking device (1) in accordance with any of claims 1 to 3,
**characterized in that**,
the at least two pawls (20) are arranged circumferentially distributed around the axis of rotation (X).

5. Locking device (1) in accordance with any of claims 1 to 4,
**characterized in that**,
each of the at least two pawls (20) are pivotable around a pivot axis (X2), each of which is preferably arranged parallel to the axis of rotation (X).

6. Locking device (1) in accordance with any of the preceding claims,
**characterized in that**
at least one pretension is provided, by means of which at least one of the at least two pawls (20) is pressed against the ratchet wheel (10).

7. Locking device (1) in accordance with any of the preceding claims,
**characterized in that**
the at least two pawls (20) and the coupling element (30) are coupled by means of a guide nose (25) guided in a slide guide (35).

8. Locking device (1) in accordance with any of the preceding claims,
**characterized in that**
at least one of the two pawls (20) comprises a guide nose (25) that is arranged at a distance to the axis (X2), **in that** the coupling element (30) comprises a slide guide (35), and **in that** the guide nose (25) engages with the slide guide (35).

9. Locking device (1) in accordance with claim 7 or 8,
**characterized in that**
the slide guide (35) is implemented in an L-shape in a first segment (36) and in a second segment (37), and **in that** the first segment (36) is aligned in a circumferential direction and the second segment (37) in a radial direction.

10. Locking device (1) in accordance with any of the preceding claims,
**characterized in that**
at least one of the two pawls (20) comprises, on a first side (21), a bearing pin (24), and on the opposite second side (22), the guide nose (25) or the slide guide (35).

11. Locking device (1) in accordance with any of the preceding claims,
**characterized in that**
the coupling element (30) is rotatable around the axis of rotation (X).

12. Locking device (1) in accordance with any of the preceding claims,
**characterized in that**
the coupling element (30) is ring-shaped.

13. Locking device (1) in accordance with any of the preceding claims,
**characterized in that**
the positioning device (50) is a linear actuator.

14. Locking device (1) in accordance with any of the preceding claims,
**characterized in that**
the linear actuator is a solenoid (55) with two stable end positions, and/or **in that** the solenoid (55) is connected to the coupling element (30) such that the solenoid (55) is in a stable end position both in the first position (A), as well as in the second position (B) of the coupling element (30).

15. Locking device (1) in accordance with any of the preceding claims,
**characterized in that**
at least one sensor (70) is provided which can detect whether or not the ratchet wheel (10) has been released.

16. Locking device (1) in accordance with claim 15,
**characterized in that**
the at least one sensor (70) detects the position of the positioning device (50) and/or the position of the coupling element (30).

17. Locking device (1) in accordance with claim 15 or 16,
**characterized in that**
the at least one sensor (70) detects whether at least one of the at least two pawls (20) engages with the ratchet wheel (10).

18. Locking device (1) in accordance with any of the preceding claims,
**characterized in that**
a housing (40) is provided, and **in that** the at least two pawls (20) and/or the coupling element (30) are mounted on the housing (40).

19. Locking device (1) in accordance with claim 18,
**characterized in that**
the housing (40) is a hybrid component of a metal and of a plastic.

20. Locking device (1) in accordance with any of the preceding claims,
**characterized in that**
the at least one sensor (70) and/or a controller of the positioning device (50) is arranged on the housing (40).

21. Parking brake, comprising an electromotor which actuates a brake and a locking device (1) in accordance with any of the preceding claims.

22. Parking brake in accordance with claim 21,
**characterized in that** a temperature detection of the brake is provided.

## Revendications

1. Dispositif de verrouillage (1) d'un frein de stationnement comprenant :
- une roue à rochet (10) mobile autour d'un axe de rotation (X) et ayant une denture (12) avec des dents (14),
- au moins deux cliquets (20) qui peuvent pénétrer dans la roue à rochet (10),
- une installation de réglage (50), et
- un élément de couplage (30),
- l'élément de couplage (30) relie au moins les deux cliquets (20) à l'installation de réglage (50), et
- l'élément de couplage (30) est mis par l'installation de réglage (50) dans une première position (A) dans laquelle les deux verrous (20) permettent la rotation de la roue à rochet (10) dans un premier sens de rotation et dans un second sens de rotation et une seconde position (B) dans laquelle les deux verrous (20) peuvent venir dans la roue à rochet (10) et autoriser sa rotation exclusivement dans le premier sens de rotation.

2. Dispositif de verrouillage (1) selon la revendication 1,
**caractérisé en ce que**
les deux verrous (20) sont installés dans des angles de division différent (τ), par rapport à une dent (14) respective de la roue à rochet (10).

3. Dispositif de verrouillage (1) selon la revendication 1 ou 2,
**caractérisé en ce que**
dans la seconde position (B), pour une rotation de la roue à rochet (10) dans le premier sens de rotation, les deux cliquets (20) viennent alternativement en prise avec la roue à rochet (10).

4. Dispositif de verrouillage (1) selon l'une des revendications 1 à 3,
**caractérisé en ce que**
au moins les deux cliquets (20) sont répartis autour de l'axe de rotation (X).

5. Dispositif de verrouillage (1) selon l'une des revendications 1 à 4,
**caractérisé en ce que**
les deux cliquets (20) peuvent pivoter respectivement autour d'un axe de pivotement (X2) qui est, de préférence, parallèle à l'axe de rotation (X).

6. Dispositif de verrouillage (1) selon l'une des revendications précédentes,
**caractérisé en ce que**
il est prévu au moins une précontrainte qui pousse au moins l'un des deux cliquets (20) contre la roue à rochet (10).

7. Dispositif de verrouillage (1) selon l'une des revendications précédentes,
**caractérisé en ce que**
les deux cliquets (20) et l'élément de couplage (30) sont couplés par un bec de guidage (25) guidé dans une coulisse de guidage (35).

8. Dispositif de verrouillage (1) selon l'une des revendications précédentes,
**caractérisé en ce que**
au moins l'un des deux cliquets (20) comporte un bec de guidage (25) écarté de l'axe (X2) et l'élément de couplage (30) comporte une coulisse de guidage (35) et le bec de guidage (25) pénètre dans la coulisse de guidage (35).

9. Dispositif de verrouillage (1) selon la revendication 7 ou 8,
**caractérisé en ce que**
la coulisse de guidage (35) a une forme en L composée d'un premier segment (36) et d'un second segment (37), et
le premier segment (36) est orienté dans la direction périphérique et le second segment (37) est orienté dans la direction radiale.

10. Dispositif de verrouillage selon l'une des revendications précédentes,
**caractérisé en ce que**
au moins l'un des deux cliquets (20) comporte sur un premier côté (21) un goujon de palier (24) et sur le second côté (22), opposé le bec de guidage (25) ou la coulisse de guidage (35).

11. Dispositif de verrouillage (1) selon l'une des revendications précédentes,
**caractérisé en ce que**
l'élément de couplage (30) tourne autour de l'axe de rotation (X).

12. Dispositif de verrouillage (1) selon l'une des revendications précédentes,
**caractérisé en ce que**
l'élément de couplage (30) est de forme annulaire.

13. Dispositif de verrouillage (1) selon l'une des revendications précédentes,
**caractérisé en ce que**
l'installation de réglage (50) est un actionneur linéaire.

14. Dispositif de verrouillage (1) selon la revendication 13,
**caractérisé en ce que**
l'actionneur linéaire est un aimant de translation (55) à deux positions de fin de course stables et/ou l'aimant de translation (55) est relié à l'élément de couplage (30) pour qu'il (55) se trouve respectivement dans l'une des positions de fin de course stable pour la première position (A) et aussi la seconde position (B) de l'élément de couplage (30).

15. Dispositif de verrouillage (1) selon l'une des revendications précédentes,
**caractérisé en ce que**
il comporte au moins un capteur (70) détectant si la roue à rochet (10) est libérée ou non.

16. Dispositif de verrouillage (1) selon la revendication 15
**caractérisé en ce que**
le capteur (70) saisit la position de l'installation de réglage (50) et/ou la position de l'élément de couplage (30).

17. Dispositif de verrouillage (1) selon la revendication 15 ou 16,
**caractérisé en ce que**
le capteur (70) détecte si au moins l'un des deux cliquets (20) pénètre dans la roue à rochet (10).

18. Dispositif de verrouillage (1) selon l'une des revendications précédentes,
**caractérisé en ce que**
il est prévu un boîtier (40) et au moins les deux cliquets (20) et/ou l'élément de couplage (30) sont montés sur le boîtier (40).

19. Dispositif de verrouillage (1) selon la revendication 18,
**caractérisé en ce que**
le boîtier (40) est un composant hybride en métal et en matière plastique.

20. Dispositif de verrouillage (1) selon l'une des revendications précédentes,
**caractérisé en ce que**
le capteur (70) et/ou la commande de l'installation de réglage (50) sont montés sur le boîtier (40).

21. Frein de stationnement comportant un moteur électrique actionnant le frein et un dispositif de verrouillage (1) selon l'une des revendications précédentes.

22. Frein de stationnement selon la revendication 21,
**caractérisé en ce que**
il est prévu un capteur de température pour le frein.
